# EUROPEAN PATENT APPLICATION

(11) **EP 2 148 067 A1**
(43) Date of publication of application: **27.01.2010**
(21) Application number: 08752962.4
(22) Date of filing: 20.05.2008
(51) Int. Cl.: F02D 13/02, F02M 25/07

(54) **4 CYCLE ENGINE**

(30) Priority: 21.05.2007 JP 2007134717
(71) Applicant: Cd-Adapco Japan Co., Ltd., Kanagawa 220-8137 (JP); Hatamura, Koichi, Hiroshima-shi, Hiroshima 732-0813 (JP)
(72) Inventor: HATAMURA, Koichi, Chiba-Ken 276-0028 (JP); YAMADA, Toshio, Yokohama-shi Kanagawa 220-8137 (JP); MORITA, Atsushi, Yokohama-shi Kanagawa 220-8137 (JP)
(74) Representative: Grünecker, Kinkeldey, Stockmair & Schwanhäusser Anwaltssozietät
(86) International application number: PCT/JP2008/059166
(87) International publication number: WO 2008/143227

(57) **Abstract**

A four-cycle engine including a blowdown pressure wave supercharging system (40) compressing and supplying exhaust gas into a second cylinder (#1) by causing a pressure wave (blowdown pressure wave) from a combustion chamber at opening of an exhaust valve of a first cylinder (#4) to act on an exhaust port (1e) of the second cylinder (#1) and during a reopen period of an exhaust valve of the second cylinder; and a mask member (50) restraining the exhaust gas (EGR gas) compressed and supplied into the second cylinder (#1) from mixing with fresh air flowing from an intake port (1d), wherein a first temperature layer (T1) at a high temperature containing a large amount of the EGR gas in the fresh air and a second temperature layer (T2) at a temperature lower than that of the first temperature layer (T1) containing a smaller amount of the EGR gas than that of the first temperature layer (T1) in the fresh air are formed in the second cylinder (#1).

## Description

### Technical Field

The present invention relates to a four-cycle engine structured to introduce fresh air into a cylinder via an intake port and to suck exhaust gas back into the cylinder via an exhaust port.

Note that in Description of this application, air introduced into the cylinder via the intake port is referred to as fresh air, and exhaust gas sucked back into the cylinder via the exhaust port is referred to as EGR gas.

### Background Art

Homogeneous Charge Compression Ignition (HCCI) engine is expected as means for realizing a fuel efficiency as high as the diesel engine while maintaining the low emission characteristics inherent in the gasoline engine. Note that fuel is supplied by injection near the compression top dead center in a normal diesel engine, whereas fuel is injected earlier into a combustion chamber or mixed with air in an intake port and introduced into a combustion chamber, and then the premixed gas is auto-ignited near the compression top dead center by advancement of chemical reaction by temperature rise due to compression.

The present inventor has considered that it is important to control an internal EGR amount and realize supercharging without a supercharger in order to widen the operation range of the HCCI engine, and proposed the method therefor.

Though the operation range of the HCCI engine can be widened by the above-described method, practical HCCI operation cannot be realized because the rate of pressure rise is too high in the high load operation range. As means for decreasing the rate of pressure rise to realize combustion as slow as the normal spark ignition engine, stratification of the mixed gas and temperature distribution is regarded as effective (see Non-patent Document 1).
[Non-patent Document 1] JSAE20055667

### Disclosure of the Invention

### Problems to be Solved by the Invention

Aforementioned Non-patent Document 1 discloses that intake air in two intake ports are heated by heaters to make a temperature difference and that when the temperature difference is increased, the rate and period of heat generation greatly vary. However, in aforementioned Document 1, realization of the slow combustion has been proved by experiments and simulation but its method is far from practical.

The present invention has been made in consideration of the past circumstances, and its object is to provide a four-cycle engine realizing stratification of the temperature distribution with a simple structure to be able to prevent knocking under a high load.

### Means for Solving the Problems

In an invention of claim 1, a four-cycle engine having a first cylinder and a second cylinder different in combustion timing from the first cylinder and structured to introduce fresh air into each of the cylinders via an intake port opened/closed by an intake valve and suck exhaust gas back into each of the cylinders via an exhaust port opened/closed by an exhaust valve includes: an exhaust valve reopening system reopening the exhaust valve of the second cylinder from near a bottom dead center of an intake stroke to near a bottom dead center of a compression stroke; a blowdown pressure wave supercharging system compressing and supplying the exhaust gas into the second cylinder by causing a pressure wave (blowdown pressure wave) from a combustion chamber at opening of the exhaust valve of the first cylinder to act on the exhaust port of the second cylinder and during a reopen period of the exhaust valve of the second cylinder; and a mask member restraining the exhaust gas (EGR gas) compressed and supplied into the second cylinder from mixing with the fresh air flowing from the intake port, wherein a first temperature layer at a high temperature containing a large amount of the EGR gas in the fresh air and a second temperature layer at a temperature lower than that of the first temperature layer containing a smaller amount of the EGR gas than that of the first temperature layer in the fresh air are formed in the second cylinder.

In an invention of claim 2 according to claim 1, the engine is a homogeneous charge compression ignition (HCCI) engine auto-igniting fuel injected earlier into the combustion chamber or fuel mixed with air in the intake port and then introduced into the combustion chamber, near a compression top dead center by temperature rise due to compression.

In an invention of claim 3 according to claim 1 or 2, the mask member is formed in an arc shape along a peripheral edge of the exhaust valve opening forming a circular shape, and a peripheral length and an arrangement position of the mask member are set such that the compressed and supplied EGR gas flows along a portion of a cylinder internal surface on the exhaust port side of a center of the exhaust valve opening.

In an invention of claim 4 according to claim 3, the peripheral length and the arrangement position of the mask member are set such that most of the mask member is located opposite the exhaust port side of an exhaust valve opening straight line passing through the center of the exhaust valve opening and parallel to the crankshaft.

In an invention of claim 5 according to claim 3, the peripheral length and the arrangement position of the mask member are set such that a bisector of the arc passing through the center of the exhaust valve opening intersects with the portion of the cylinder internal surface on the exhaust port side of the exhaust valve opening straight line.

In an invention of claim 6 according to any one of claims 2 to 5, the mask member is arranged such that a mask center thereof is located in a range of 300 degrees to 60 degrees, and has a peripheral length of the mask center ±90 degrees to 180 degrees, as seen in the clockwise direction where a portion thereof located closest to the intake port side of the exhaust valve opening is at 0 degree.

In an invention of claim 7 according to any one of claims 1 to 6, a height dimension of the mask member in an exhaust valve axial direction is set to a lift amount or less at the reopen of the exhaust valve.

### Effects of the Invention

According to the invention in claim 1, the engine is structured to suck exhaust gas at a high temperature back from the exhaust port into each of the cylinders from near a bottom dead center of an intake stroke to near a bottom dead center of a compression stroke. Therefore, no or little fresh air will flow in after the exhaust gas is sucked in back to restrain the EGR gas from mixing with fresh air, so that the EGR gas can be unevenly distributed to form the first temperature layer and the second temperature layer having a temperature difference therebetween.

Further, since the mask member restraining the compressed and supplied EGR gas from mixing with the fresh air flowing from the intake port is provided at a portion of the exhaust valve opening. This can also restrain the EGR gas from mixing with the fresh air to achieve the temperature difference between the first temperature layer and the second temperature layer mode surely.

Consequently, combustion is started from the portion of the first temperature layer at a high temperature, and the combusting portion shifts to the second temperature layer at a low temperature. Therefore, the rate of pressure rise is lowered, so that problems such as knocking and combustion noise or damage to the engine can be avoided.

According to the invention in claim 2, the HCCI is structured to suck exhaust gas at a high temperature back from the exhaust port into each of the cylinders from near a bottom dead center of an intake stroke to near a bottom dead center of a compression stroke, and a mask member restraining the compressed and supplied EGR gas from mixing with the fresh air flowing from the intake port is provided at a portion of the exhaust valve opening. Therefore, the first temperature layer and the second temperature layer having a temperature difference therebetween can be formed to lower the rate of pressure rise, so that problems such as knocking and combustion noise or damage to the engine can be avoided to widen the HCCI operable range.

According to the invention in claim 3, a peripheral length and an arrangement position of the mask member are set such that the compressed and supplied EGR gas flows along a portion of a cylinder internal surface on the exhaust port side of a center of the exhaust valve opening. Specifically, as described in claim 4, the mask member is arranged such that most of the mask member is located opposite the exhaust port side of an exhaust valve opening straight line. Alternatively, as described in claim 5, the mask member is structured such that a bisector of the mask member passing through the center of the exhaust valve opening (the center of the mask member) intersects with the portion of the cylinder internal surface on the exhaust port side of the exhaust valve opening straight line. This makes it possible to cause the sucked back EGR gas to flow along the portion of the cylinder internal surface on the exhaust port side to thereby sequentially push fresh air on the cylinder internal surface side out of the vicinity of the internal surface and keep the EGR gas existing along the cylinder internal surface. As a result, the portion of the EGR gas along the internal surface on the exhaust port side is never brought into contact with fresh air. This makes it possible to surely restrain the EGR gas from mixing with fresh air to achieve the temperature difference between the first temperature layer and the second temperature layer more surely.

According to the invention in claim 6, the arrangement position of the mask member is set such that a mask center thereof is located in a range of 300 degrees to 60 degrees and a peripheral length is the mask center ±90 degrees to 180 degrees. Therefore, specific structures realizing the structures described in claim 2 to 5 can be provided to achieve the above-described operations and effects.

According to the invention in claim 7, a height dimension of the mask member in an exhaust valve axial direction is set to a lift amount or less at the reopen of the exhaust valve. This makes it possible to surely prevent the EGR gas from passing through the mask side into the cylinder without resisting emission of the exhaust gas in the exhaust stroke to thereby cause the EGR gas to flow in along the cylinder internal surface on the exhaust port side as described above.

### Brief Description of Drawings

FIG. 1 is a schematic structural view of a four-cycle engine according to a first embodiment of the present invention;
FIG. 2 is a cross-sectional side view of the engine;
FIG. 3 is a schematic plan view of a valve device of the engine;
FIGS. 4 are schematic cross-sectional plan views of a switching system of the valve device;
FIG. 5 is a schematic perspective view showing an arrangement state of a mask member of the engine;
FIG. 6 is a schematic plan view showing the arrangement state of the mask members of the engine;
FIG. 7 is a schematic plan view for describing ranges of the peripheral length and the arrangement position of the mask member of a left exhaust valve EX2 of the engine;
FIG. 8 is a schematic plan view for describing more preferable arrangement positions of the mask member of the exhaust valve EX2;
FIG. 9 is a schematic cross-sectional side view showing a temperature distribution in a cylinder bore of the engine of the embodiment;
FIG. 10 is a schematic cross-sectional plan view (a cross-sectional view taken along a line X-X in FIG. 9) showing the temperature distribution in the cylinder bore of the engine of the embodiment;
FIG. 11 is a graph showing opening/closing timings of intake valves and exhaust valves and EGR opening/closing timings of the engine;
FIGS 12 are views for describing a simulation method for verifying the effects of the present invention; and
FIG. 13 is a graph for describing the simulation result for verifying the effects of the present invention.

### Explanation of Numerals and Symbols

1 four-cycle engine
1a cylinder bore (cylinder internal surface)
1d intake port
1e exhaust port
1e' exhaust valve opening
9 EGR valve opening system (exhaust valve reopening system)
40 blowdown pressure wave supercharging system
50 mask member
A cylinder axis
e exhaust valve opening straight line
e' cylinder straight line
e1' center of exhaust valve opening
EX exhaust valve
f bisector
IN intake valve
T1 first temperature layer
T2 second temperature layer
#1 second cylinder
#4 first cylinder

### Best Mode for Carrying out the Invention

Hereinafter, embodiments of the present invention will be described based on the attached drawings.

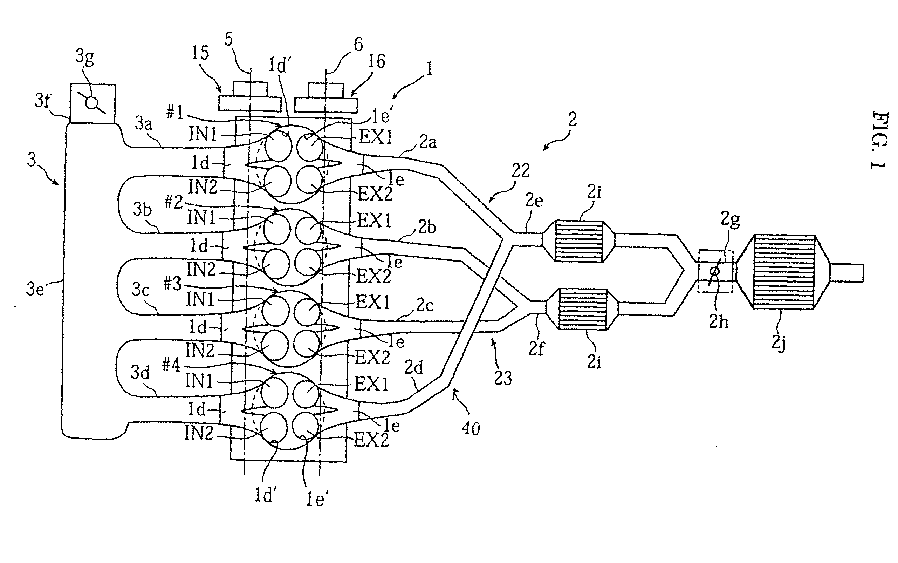

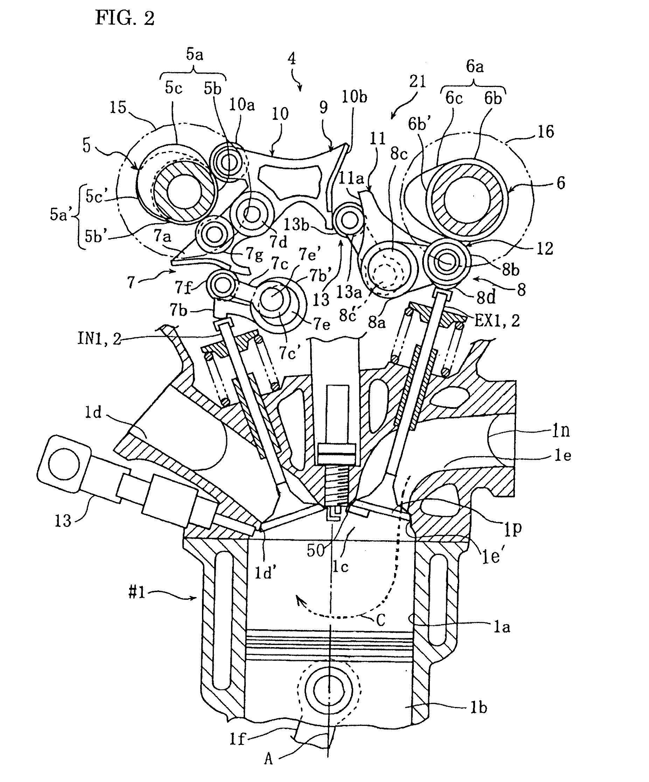

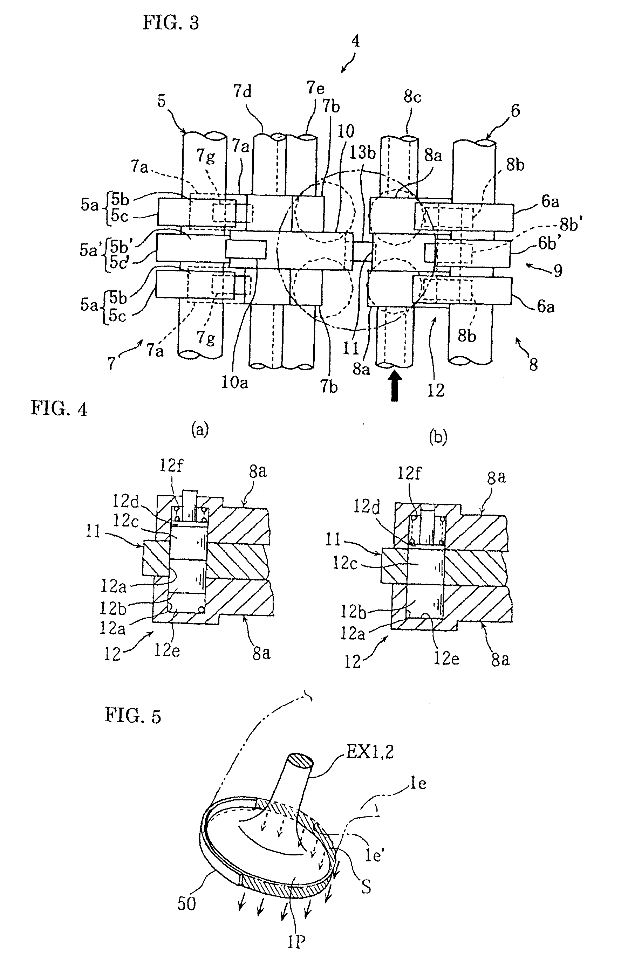

FIG. 1 to FIG. 11 are views for describing a four-cycle engine according to a first embodiment of the present invention. FIG. 1 is an overall structural view. FIG. 2 is a cross-sectional side view of this engine. FIG. 3 is a schematic plan view of a valve system.

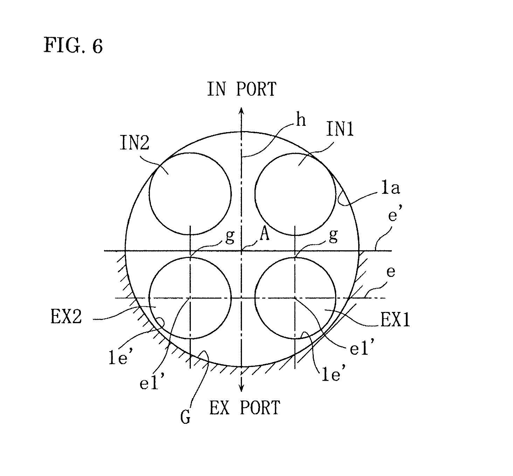

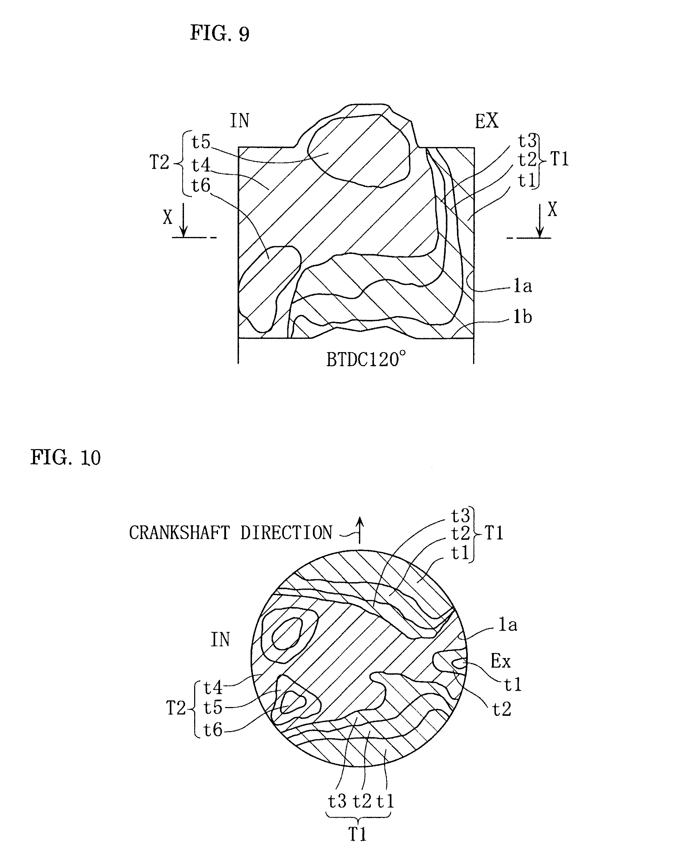

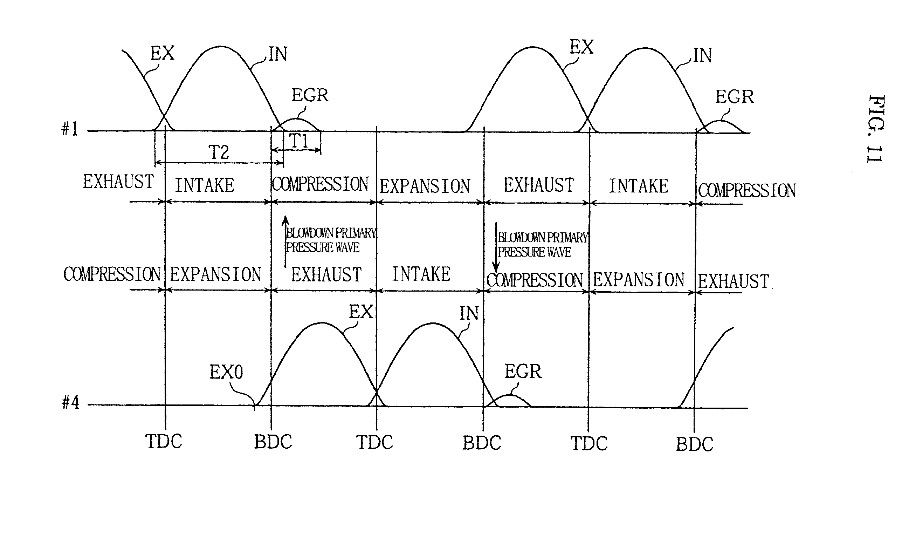

FIGS. 4 are schematic views of a switching system. FIG. 5 is a perspective view of a mask member. FIG. 6 to FIG. 8 are views for describing the arrangement positions and peripheral lengths of the mask members. FIG. 9 and FIG. 10 are views for describing temperature stratification. FIG. 11 is a schematic graph for describing blowdown pressure wave supercharging and EGR valve opening operation.

In the drawings, numeral 1 denotes an HCCI engine based on a four-cylinder, four-valve DOHC gasoline engine. This engine 1 includes #1 cylinder to #4 cylinder. The #1 cylinder to #4 cylinder each have four valves in total: two intake valves IN1, IN2 and two exhaust valves EX1, EX2. Further, the engine 1 includes in-cylinder gasoline injection valves 13, and has a compression ratio set to 12 which is optimal for spark ignition combustion.

The order of ignition in the engine 1 is #1 - #3 - #4 - #2 cylinders. The phase between the cylinders (ignition interval) is 180 degrees in crankshaft angles. Therefore, the phase between the #1 cylinder and the #4 cylinder and the phase between the #2 cylinder and the #3 cylinder are 360 degrees each. Note that the piston positions of the #1 cylinder and the #4 cylinder are always the same, and the piston positions of the #2 cylinder and the #3 cylinder are always the same. The piston positions of the #1 cylinder and the #4 cylinder are different by 180 degrees from the piston positions of the #2 cylinder and the #3 cylinder.

The specific structure of the engine 1 will be described. In a cylinder bore 1a of each of the #1 to #4 cylinders, a piston 1b is inserted slidably, and the piston 1b is coupled to a crankshaft (not shown) by a connecting rod 1f. In a combustion chamber 1c located above the cylinder bore 1a, there open two intake valve openings 1d' of an intake port 1d, and two exhaust valve openings 1e' of an exhaust port 1e. These openings are opened/closed by the first, second intake valves IN1, IN2 and the first, second exhaust valves EX1, EX2.

The intake valve openings 1d', 1d' for the first, second intake valves are lead out by the bifurcated intake port 1d toward a cylinder head front wall and open in the front wall.

Further, the openings 1e', 1e' for the first, second exhaust valves EX1, EX2 are lead out by the bifurcated exhaust port 1e toward a cylinder head rear wall and open in the rear wall. Note that In denotes a partition wall dividing the exhaust port 1e into two portions.

The intake valves IN1, IN2 and the exhaust valves EX1, EX2 are driven to open/close by a valve device 4. This valve device 4 has an intake valve drive system 7 capable of sequentially changing open periods and lift amounts of the intake valves IN1, IN2, and an exhaust valve drive system 8 for opening/closing the exhaust valves EX1, EX2.

The exhaust valve drive system 8 includes an exhaust cam shaft 6 and an exhaust rocker shaft 8c which are arranged in parallel to the crankshaft, exhaust rocker arms 8a, 8a pivotally and rockably supported by the exhaust rocker shaft 8c, and rollers 8b pivotally supported on tip portions of the rocker arms 8a. On the exhaust cam shaft 6, exhaust cam noses 6a each having a base circular portion 6b and a lift portion 6c are formed corresponding to the exhaust valves.

Rotation of the exhaust cam shaft 6 causes the exhaust cam noses 6a to rock the rocker arms 8a vertically via the rollers 8b, and tip portions 8d of the rocker arms 8a push down the exhaust valves EX in an opening direction.

The intake valve drive system 7 includes an intake cam shaft 5, an intake rocker shaft 7e, and a support shaft 7d which are arranged in parallel to the crankshaft, rocker cams 7a supported rockably by the support shaft 7d, and intake rocker arms 7b driven rockably by the rocker cams 7a via intake control arms 7c. On the intake cam shaft 5, intake cam noses 5a are formed corresponding to the intake valves of each of the cylinders. The intake cam noses 5a each have a base circular portion 5b and a lift portion 5c.

A base end portion 7b' in a ring shape of each intake rocker arm 7b is pivotally supported by the intake rocker shaft 7e. A base end portion 7c' in a ring shape of each intake control arm 7c is pivotally supported by an arm support shaft 7e' eccentric from the axial center of the intake rocker shaft 7e. When the intake rocker shaft 7e is rotated, the intake control arms 7c move forward and backward. This changes the start position of slide contact of rollers 7f at tip portions with the rocker cams 7a, and thereby changes the open periods and lift amounts of the intake valves.

When the intake cam shaft 5 is rotated, the intake cam noses 5a of the intake cam shaft 5 rock the intake rocker arms 7b vertically via the rocker cams 7a and the intake control arms 7c, and tip portions of the intake rocker arms 7b push down the intake valves IN1, IN2 in an opening direction.

Further, as shown in FIG. 2 and FIG. 5, a mask members 50 is provided at the exhaust valve opening 1e' to cover the outer periphery of a valve head 1p of the exhaust valve EX. The mask member 50 is for causing an exhaust gas reverse flow (EGR gas flow) to flow down in a cylinder axial direction A along a portion of the cylinder internal surface on the exhaust port side. This causes the EGR gas to flow from the intake port and sequentially push fresh air located at the portion of the cylinder internal surface on the exhaust port side and substitute for the fresh air, thereby restraining mixture of the EGR gas with the fresh gas.

The mask member 50 is integrally formed with the valve head 1p of the exhaust valve EX or integrally formed with the cylinder head on the ceiling wall side of the combustion chamber. Further, the mask member 50 is formed in an arc shape along the peripheral edge of the exhaust valve opening 1e' forming a circular shape. The dimension of the mask member 50 in the exhaust valve axial direction (height dimension) is set to substantially the same dimension as the lift amount at later-described EGR valve opening of the exhaust valve and specifically, for example, to about 2 mm to about 3 mm.

The peripheral length (length in the peripheral direction) and the arrangement position of the mask member 50 are set such that most of the EGR gas flows as shown by a broken arrow C in FIG. 2 along a portion (a region with hatchings in FIG. 6) G of the cylinder internal surface (inner peripheral surface of the cylinder bore 1a), on the exhaust port 1e side of a cylinder straight line e' passing through the cylinder axis A and parallel to the crankshaft.

In other words, the peripheral length and the arrangement position of the mask member 50 are set such that most of the peripheral length is located opposite the exhaust port side of an exhaust valve opening straight line e linking centers e1', e1' of the exhaust valve openings 1e', 1e', that is, on the intake port 1d side.

In still other words, the peripheral length and the arrangement position of the mask member 50 are set such that an extended line of a bisector f of the peripheral length of the mask member passing through the center e1' of the exhaust valve opening intersects with the portion of the region G on the exhaust port side of the exhaust valve opening straight line e.

Specific examples of the peripheral lengths and the arrangement positions of the mask members 50 will be described based on FIG. 6 to FIG. 8. Note that the mask member 50 of the left exhaust valve EX2 and the mask member 50 on the right exhaust valve EX1 have peripheral lengths and arrangement positions symmetrical about a straight line h passing through the cylinder axis A and intersecting with the crankshaft. Therefore, the mask member 50 of the left exhaust valve EX2 will be mainly described.

Herein after, the center position and the peripheral length of the mask member 50 are indicated by the angles in the clockwise direction with a point g (see FIG. 6) located closest to the intake port side of the peripheral edge of the exhaust valve opening 1e' as 0 degree.

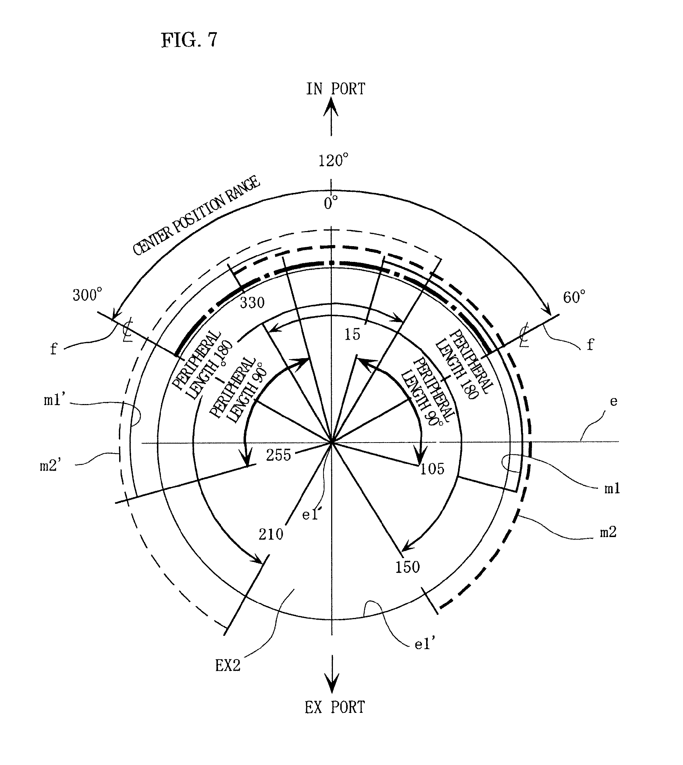

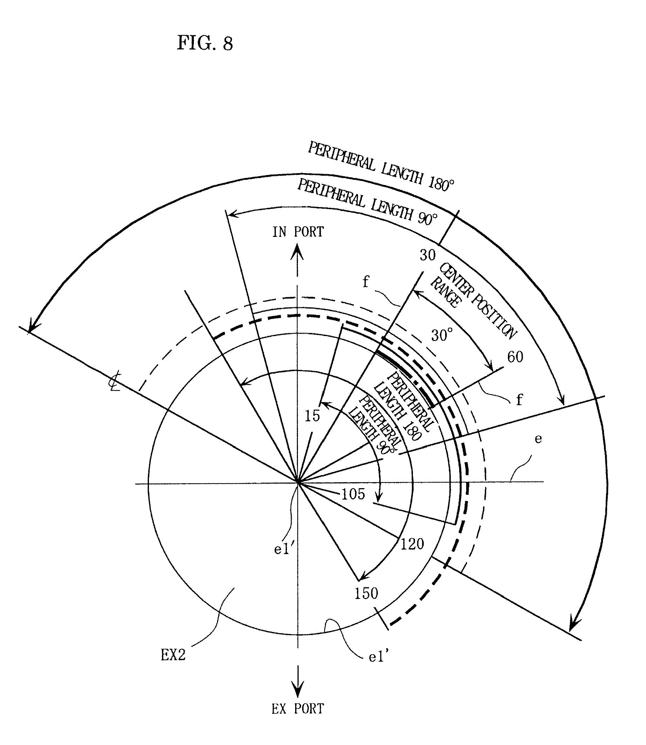

FIG. 7 shows ranges of the peripheral length and the arrangement position of the mask member within the present invention. FIG. 8 shows more preferable ranges of the peripheral length and the arrangement position of the mask member.

In FIG. 7, the peripheral length of the mask member 50 in this embodiment is set to a length covering 90 degrees to 180 degrees of the outer periphery of the valve head 1p of the exhaust valve EX2. Further, the mask member 50 is arranged such that the center line thereof (the bisector of the mask member) f is located in a range of 300 degrees to 60 degrees, that is, 10 o'clock to 2 o'clock when indicated on a clock. A symbol m1 in FIG. 7 indicates a case in which the shortest mask member (having a peripheral length of 90 degrees) is located at a position where the center position thereof advances clockwise as mush as possible (60 degrees (2 o'clock)). A symbol m2 indicates a case in which the longest mask member (having a peripheral length of 180 degrees) is located at a position where the center position thereof advances clockwise as mush as possible (60 degrees (2 o'clock)). Further, m1' indicates a case in which the shortest mask member (having a peripheral length of 90 degrees) is located at a position where the center position thereof retracts clockwise as mush as possible (300 degrees (10 o'clock)). A symbol m2' indicates a case in which the longest mask member (having a peripheral length of 180 degrees) is located at a position where the center position thereof retracts clockwise as mush as possible (300 degrees (10 o'clock)).

FIG. 8 shows a case in which the mask members 50 having peripheral lengths of 90 degrees to 180 degrees are arranged at more preferable positions, and the mask members 50 are arranged such that the center positions thereof are located in a range from 30 degrees (1 o'clock) to 60 degrees (2 o'clock) clockwise.

An intake device 3 connected to the engine 1 has a surge tank 3e having a predetermined volume and branch pipes 3a to 3d branched from the surge tank 3e and connected to the respective intake ports 1d of the #1 cylinder to #4 cylinder. An intake throttle valve 3g is disposed on an intake port 3f formed on one end of the surge tank 3e. An air cleaner (not shown) is connected upstream of the intake throttle valve 3g.

Further, an exhaust system 2 connected to the engine 1 has branch pipes 2a, 2d, 2b, 2c of the respective cylinders with lengths being set relatively long, and is what is called a 4-2-1 exhaust system having a first exhaust system 22 coupling and exhausting the #1 cylinder and the #4 cylinder with the phase (ignition interval) of 360 degrees, and a second exhaust system 23 coupling and exhausting the #2 cylinder and the #3 cylinder with the phase of 360 degrees similarly. This system allows to avoid exhaust interference in a high load operation range, and thus is suitable for increasing output.

The first exhaust system 22 has the first, fourth branch pipes 2a, 2d connected to external openings of the exhaust ports of the #1 cylinder and the #4 cylinder, and a first merging pipe 2e merging the branch pipes 2a, 2d. The second exhaust system 23 has the second, third branch pipes 2b, 2c connected to the exhaust ports 1e of the #2 cylinder and the #3 cylinder, and a second merging pipe 2f merging the branch pipes 2b, 2c. Then the first, second merging pipes 2e, 2f merge with a main pipe 2g.

Further, upstream catalysts 2i, 2i are interposed in the first, second merging pipes 2e, 2f respectively, and a downstream catalyst 2j is interposed in the main pipe 2g. Moreover, an exhaust throttle valve 2h variably controlling an exhaust port area is interposed in the main pipe 2g upstream of the downstream catalyst 2j.

The engine of this embodiment has a blowdown pressure wave supercharging system 40 causing a combustion chamber internal pressure wave (exhaust blowdown pressure wave) from near a bottom dead center of an expansion stroke to near a bottom dead center of an exhaust stroke of the #4 cylinder (first cylinder) to act on the exhaust ports 1e from near a bottom dead center of an intake stroke to near a bottom dead center of a compression stroke of the #1 cylinder (second cylinder) which is different from the #4 cylinder in combustion timing by 360 degrees, and an EGR valve opening system (exhaust valve reopening system) 9 reopening the exhaust valves EX1, EX2 of the #1 cylinder from near the bottom dead center of the intake stroke to near the bottom dead center of the compression stroke. This causes the exhaust blowdown pressure wave from the #4 cylinder to supercharge the EGR gas at a high temperature from the exhaust ports 1e into the combustion chamber.

In addition, the blowdown pressure wave supercharging system 40 and the EGR valve opening system 9 are structured to supercharge EGR gas into the #4 cylinder using the exhaust blowdown pressure wave from the #1 cylinder, and further structured to supercharge EGR gas into the #3 cylinder using the exhaust blowdown pressure wave from the #2 cylinder and to supercharge conversely EGR gas into the #2 cylinder using the exhaust blowdown pressure wave from the #3 cylinder. The relationship between the #1 cylinder and the #4 cylinder will be described in detail below.

The blowdown pressure wave supercharging system 40 is realized by shifting the combustion timing by 360 degrees between the #1 cylinder and the #4 cylinder, and setting the lengths of the exhaust branch pipes 2a, 2d between both cylinders so that the exhaust blowdown pressure wave from the #4 cylinder reaches the exhaust ports of the #1 cylinder near the intake stroke bottom dead center of the #1 cylinder. Further, the EGR valve opening system 9 is structured to open the exhaust valves EX1, EX2 of the #1 cylinder again by the intake cam shaft 5, as shown by lift curves EGR in FIG. 11, from near the bottom dead center of the intake stroke to near the bottom dead center of the compression stroke of the #1 cylinder.

The EGR valve opening system 9 has an EGR cam nose 5a' formed on the intake cam shaft 5, an exhaust rocker cam 10 pivotally supported by the support shaft 7d, an intermediate lever 11 pivotally supported by the exhaust rocker shaft 8c, an exhaust control arm 13 pivotally supported by an arm support shaft 8c' which is eccentric from the shaft center of the exhaust rocker shaft 8c, and an EGR guide cam 6b' formed on the exhaust cam shaft 6.

The EGR cam nose 5a' on the intake cam shaft 5 side is formed between two intake cam noses 5a, 5a of the intake cam shaft 5. This EGR cam nose 5a' has an EGR base circular portion 5b' with the same diameter as that of the base circular portion 5b on the intake side, and an EGR lift portion 5c' with a smaller lift amount than that of the lift portion 5c on the intake side.

Further, the EGR guide cam 6b' on the exhaust cam shaft 6 side has the same diameter as that of the base circular portion 6b of the exhaust cam nose 6a. Incidentally, this EGR guide cam 6b' is formed of only a base circular portion and has no lift portion.

A roller 10a is disposed on one side across the support shaft 7d of the exhaust rocker cam 10, and a cam face 10b is formed on the other side thereof. The roller 10a is in rotary contact with the EGR cam nose 5a', and a roller 13b of the exhaust control arm 13 is in rotary contact with the cam face 10b.

The intermediate lever 11 forms a substantially triangle shape, and a vertex angle portion of this triangle is supported rockably by the exhaust rocker shaft 8c. Further, rollers 8b are pivotally supported by one base angle portion of the triangle, and a cam face 11 a is formed on an oblique side continuous to the other base angle portion. The rollers 8b are in rotary contact with the EGR guide cam 6b', and a press portion 13a formed on a tip of the exhaust control arm 13 is in slide contact with the cam face 11a.

Here, between the intermediate lever 11 and two exhaust rocker arms 8a, 8a, there is formed a switching system 12 capable of switching to one of an EGR valve opening ON state in which rocking of the intermediate lever 11 is transmitted to the exhaust rocker arms 8a, 8a, and an EGR valve opening OFF state in which the rocking is not transmitted.

The switching system 12 has a structure in which, as shown in FIGS. 4, a coupling hole 12a is concentrically formed in a tip portion of the intermediate lever 11 and tip portions of the exhaust rocker arms 8a, 8a, and coupling pistons 12b, 12c are arranged in the coupling hole 12a to be slidable in the axial direction and relatively movable in an axially orthogonal direction.

Further, one end face of the coupling piston 12b and one end of the coupling hole 12a form an oil pressure chamber 12e. A return spring 12f is disposed between the other end face of the coupling piston 12c and the other end of the coupling hole 12a with a stopper 12d being interposed therebetween. To the oil pressure chamber 12e, an oil pressure can be supplied via an oil pressure path 8d formed in the rocker shaft 8c.

When the oil pressure is supplied to the oil pressure chamber 12e, the coupling pistons 12c, 12b are located at positions crossing boundaries between the intermediate lever 11 and the exhaust rocker arms 8a (FIG. 4A), thereby turning to the EGR valve opening ON state. Then, when the oil pressure is released, contact portions between the coupling piston 12c and the coupling piston 12b and the stopper 12d match the boundaries (FIG. 4B), thereby turning to the EGR valve opening OFF state.

Moreover, the intake cam shaft 5 has an intake cam phase variable system 15 capable of freely controlling the phase of the intake cam shaft 5. When the phase of the intake cam shaft 5 is changed, open/close times of the intake valves IN1, IN2 in an intake stroke change, and simultaneously, open/close times of the exhaust valves EX1, EX2 in the EGR valve opening operation also change by the same phase. Further, the exhaust cam shaft 6 has an exhaust cam phase variable system 16 capable of freely controlling the phase of the exhaust cam shaft 6.

A situation will be described in detail that EGR gas is supercharged into the #1 cylinder (corresponding to a second cylinder of the present invention) using an exhaust blowdown pressure wave from the #4 cylinder (corresponding to a first cylinder of the present invention).

FIG. 11 shows lift curves EX, IN of the exhaust valves and the intake valves of the #1 cylinder and the #4 cylinder, lift curves EGR when the exhaust valves are opened again by the EGR valve opening system 9. As shown in FIG. 11, the exhaust valves open again by the EGR valve opening system 9 from near the bottom dead center of the intake stroke to near the bottom dead center of the compression stroke of each cylinder.

In the engine 1 of this embodiment, in a predetermined operation range (HCCI operation range) in which the EGR gas should be supercharged, an oil pressure is supplied to the oil pressure chamber 12e of the above-described switching system 12, and the coupling pistons 12b, 12c move to positions of FIG. 4A. Thus, the EGR cam nose 5a' on the intake cam shaft 5 drives the exhaust valves EX1, EX2 to open or close. More particularly, when the lift portion 5c' of the EGR cam nose 5a' rocks the exhaust rocker cam 10 via the roller 10a, this rocking is transmitted to the intermediate lever 11 via the roller 13b to rock the exhaust rocker arms 8a together with the intermediate lever 11. Thus, the exhaust valves EX1, EX2 perform EGR valve opening operation based on the lift curves EGR shown in FIG. 11.

Incidentally, in an operation range in which supercharging of EGR gas is not performed, the supply of the oil pressure is stopped, the coupling pistons 12b, 12c move to the positions in FIG. 4B, and rocking of the intermediate lever 11 is not transmitted to the exhaust rocker arms 8a. Therefore, the exhaust valves do not perform the EGR valve opening operation.

In this embodiment, the EGR valve opening system 9 does not operate at any time in a high-rotation range. Accordingly, valve acceleration by the EGR cam nose 5a' can be set high. The EGR cam nose 5a' has a narrow opening degree, but relatively high lift is set thereto, allowing a large amount of EGR gas to be introduced in a short time.

When the #1 cylinder approaches the intake bottom dead center, the exhaust valves of the #4 cylinder start to open near the expansion stroke bottom dead center, the exhaust blowdown pressure wave from the #4 cylinder is emitted to the exhaust system, and this exhaust blowdown pressure wave proceeds to the #1 cylinder side (see FIG. 11) via the exhaust branch pipes 2d, 2a set to the specific lengths. At this time, for the #1 cylinder, the EGR valve opening system 9 opens the exhaust valves again from near the bottom dead center of the intake stroke to near the bottom dead center of the compression stroke as shown by the lift curves EGR. The aforementioned exhaust blowdown pressure wave reaches the exhaust ports 1e of the #1 cylinder at the same timing as reopening of the exhaust valves, and the EGR gas in the exhaust ports 1e is pushed by this exhaust blowdown pressure wave into the cylinder bore 1a of the #1 cylinder.

Thus, the mask member 50 is disposed at the exhaust valve opening 1e' and the height dimension of the mask member 50 is set to substantially the same dimension as the lift amount at the EGR valve opening, so that the supercharged EGR gas is introduced into the cylinder only from a gap s (a portion with hatchings in FIG. 5) between the valve head 1p of the exhaust valve and the exhaust valve opening 1e' where the mask member 50 does not exist. Note that FIG. 5 shows a state where the exhaust valve is EGR-opened.

FIG. 9 shows here, by isothermal lines, the temperature distribution when the cylinder bore 1a is crossed along a plane perpendicular to the crankshaft including the cylinder axis A with the piston 1b located at BDTC 120 degrees after the compression stroke is started where the mask member 50 is arranged such that its length is 180 degrees and its center is located at 330 degrees. Further, FIG. 10 shows, by isothermal lines, the temperature distribution when the cylinder bore 1a in FIG. 9 is crossed along a plane perpendicular to the cylinder axis A at substantially the middle in the height direction.

As shown in FIG. 9 and FIG. 10, a first temperature layer T1 at a high temperature by containing a large amount of EGR in fresh air and a second temperature layer T2 at a temperature lower than that of the first temperature layer T1 by containing a smaller amount of EGR gas than that of the first temperature layer T1 in fresh air, are formed in the cylinder bore 1a. Note that the temperature of t1 is highest and the temperatures of t2 and t3 are lower in this order in the first temperature layer T1. Similarly, the temperature of t4 is highest and the temperatures of t5 and t6 are lower in this order in the second temperature layer T2.

The first temperature layer T1 at a high temperature extends downward along the cylinder internal surface from the exhaust port side and spreads over the top surface of the piston as seen in FIG. 9. Further, as seen in FIG. 10, the first temperature layers T1 spread along the inner peripheral surface of the cylinder bore 1a from outside portions in the crankshaft direction of the right and left exhaust valve openings 1e'. From this state, it is conceivable that the EGR gas flows down mainly along the cylinder internal surface while pushing fresh air out, from the portion of the gap s between each of the right and left exhaust valve openings 1e' and the valve head 1p of the exhaust valve where the mask member 50 does not exist to be distributed along the internal surface in this embodiment.

According to this embodiment, the engine is structured such that the exhaust gas at a high temperature is sucked back into the cylinder from the exhaust port from near the bottom dead center of the intake stroke to near the bottom dead center of the compression stroke. Therefore, no or little fresh air will flow in after the exhaust gas is sucked in back to restrain the EGR gas from mixing with fresh air, so that the EGR gas can be unevenly distributed to form the first temperature layer T1 and the second temperature layer T2 having a temperature difference therebetween.

Further, since the mask members 50 restraining the compressed and supplied EGR gas from mixing with the fresh air flowing from the intake port are provided at portions of the exhaust valve openings 1e', 1e'. This can also restrain the EGR gas from mixing with the fresh air to achieve the temperature difference between the first temperature layer T1 and the second temperature layer T2 mode surely.

Consequently, combustion is started from the portion of the first temperature layer T1 at a high temperature, and the combusting portion shifts to the second temperature layer T2 at a low temperature. Therefore the rate of pressure rise is lowered, so that problems such as knocking and combustion noise or damage to the engine can be avoided to widen the HCCI operable range.

Further, since the peripheral length and the arrangement position of the mask member 50 are set such that the mask center is located in a range of 300 degrees to 60 degrees and the peripheral length is the mask center ±90 degrees to 180 degrees, the compressed and supplied EGR gas can flow along the portion of the cylinder internal surface 1a on the exhaust port side of the centers of the exhaust valve openings 1e'.

Further, most of the mask member 50 can be arranged to be located opposite the exhaust port side of the exhaust valve opening straight line e, and the bisector (the center of the mask member) f of the mask member 50 passing through the center e1' of the exhaust valve opening can be structured to intersect with the portion of the cylinder internal surface on the exhaust port side of the exhaust valve opening straight line e. Also from this regards, the sucked back EGR gas can flow along the portion of the cylinder internal surface on the exhaust port side to thereby sequentially push fresh air on the cylinder internal surface side out of the vicinity of the internal surface and keep the EGR gas existing along the cylinder internal surface. As a result, the portion of the EGR gas along the internal surface on the exhaust port side is never brought into contact with fresh air. This makes it possible to surely restrain the EGR gas from mixing with fresh air to form the first temperature layer T1 at a high temperature containing a large amount of EGR gas in fresh air to thereby surely achieve the temperature difference from the second temperature layer T2.

Moreover, the height dimension in the exhaust valve axial direction of the mask member 50 is set to be the lift amount or less at the EGR valve opening of the exhaust valve EX This makes it possible to surely prevent the EGR gas from passing through the mask side into the cylinder without resisting emission of the exhaust gas in the exhaust stroke to thereby cause the EGR gas to flow in along the cylinder internal surface on the exhaust port side as described above. Note that when the height dimension of the mask member is increased, the flow of the EGR gas can be more surely restricted, but the resistance to emission of the exhaust gas may increase.

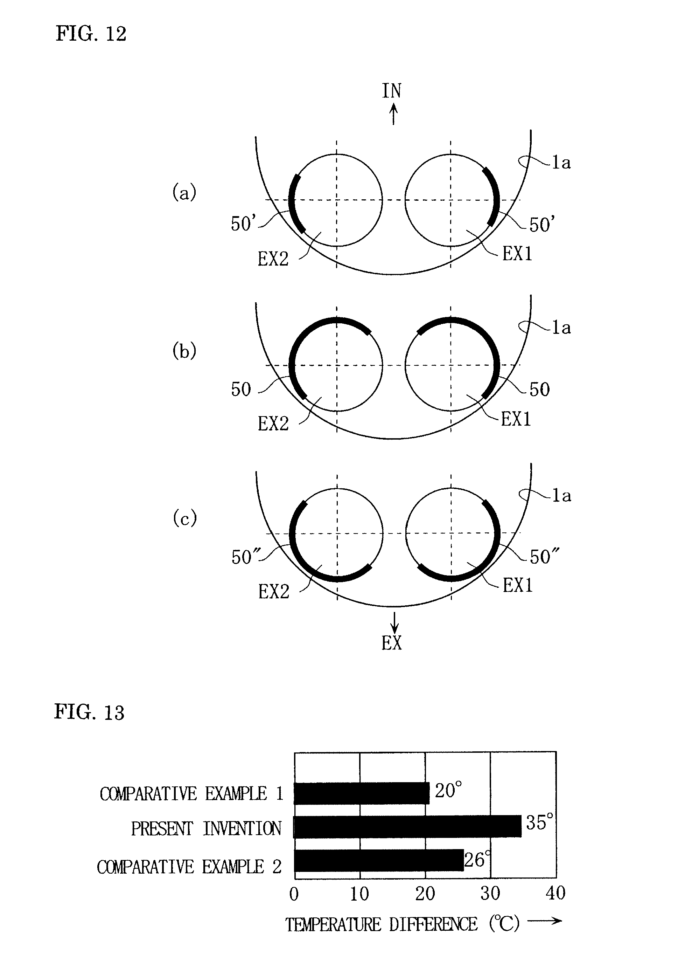

FIG. 12 and FIG. 13 are views and a graph showing the simulation results for verifying the temperature difference between the first temperature layer T1 and the second temperature layer T2 in the present invention. FIG. 12B shows Example of the present invention in which the mask members 50 each having a peripheral length of 180 degrees are arranged such that the mask centers thereof are located at 310 degrees on the left side and 50 degrees on the right side respectively in the drawing. FIG. 12A shows Comparative Example 1 in which mask members 50' each having a peripheral length of 80 degrees are arranged such that the mask centers thereof are located at 265 degrees and 95 degrees respectively. FIG. 12C shows Comparative Example 2 in which mask members 50" each having a peripheral length of 180 degrees are arranged such that the mask centers thereof are located 230 degrees and 130 degrees respectively.

FIG. 13 shows the temperature differences between the temperature corresponding to the high temperature portion in the first temperature layer and the temperature corresponding to the low temperature portion in the second temperature layer. As is clear from the drawing, the temperature differences in Comparative Example 1 and Comparative Example 2 are 20 degrees and 26 degrees respectively, whereas the temperature difference in Example of the present invention is 35 degrees.

Any peripheral length and arrangement position of the mask member are selectable as those in the present invention without departing from the scope of the invention described in claims of this application but not limited to those illustrated in FIG. 7.
The invention may be embodied in other specific forms without departing from the spirit or essential characteristics thereof.
The present embodiments are therefore to be considered in all respects as illustrative and no restrictive, the scope of the invention being indicated by the appended claims rather than by the foregoing description, and all changes which come within the meaning and range of equivalency of the claims are therefore intended to be embraced therein.

## Claims

1. A four-cycle engine having a first cylinder and a second cylinder different in combustion timing from the first cylinder and structured to introduce fresh air into each of the cylinders via an intake port opened/closed by an intake valve and suck exhaust gas back into each of the cylinders via an exhaust port opened/closed by an exhaust valve, the four-cycle engine comprising:
an exhaust valve reopening system reopening the exhaust valve of the second cylinder from near a bottom dead center of an intake stroke to near a bottom dead center of a compression stroke;
a blowdown pressure wave supercharging system compressing and supplying the exhaust gas into the second cylinder by causing a pressure wave (blowdown pressure wave) from a combustion chamber at opening of the exhaust valve of the first cylinder to act on the exhaust port of the second cylinder and during a reopen period of the exhaust valve of the second cylinder; and
a mask member restraining the exhaust gas (EGR gas) compressed and supplied into the second cylinder from mixing with the fresh air flowing from the intake port,
wherein a first temperature layer at a high temperature containing a large amount of the EGR gas in the fresh air and a second temperature layer at a temperature lower than that of the first temperature layer containing a smaller amount of the EGR gas than that of the first temperature layer in the fresh air are formed in the second cylinder.

2. The four-cycle engine according to claim 1,
wherein the engine is a homogeneous charge compression ignition (HCCI) engine auto-igniting fuel injected earlier into the combustion chamber or fuel mixed with air in the intake port and then introduced into the combustion chamber, near a compression top dead center by temperature rise due to compression.

3. The four-cycle engine according to claim 1 or 2,
wherein the mask member is formed in an arc shape along a peripheral edge of the exhaust valve opening forming a circular shape, and a peripheral length and an arrangement position of the mask member are set such that the compressed and supplied EGR gas flows along a portion of a cylinder internal surface on the exhaust port side of a center of the exhaust valve opening.

4. The four-cycle engine according to claim 3,
wherein the peripheral length and the arrangement position of the mask member are set such that most of the mask member is located opposite the exhaust port side of an exhaust valve opening straight line passing through the center of the exhaust valve opening and parallel to the crankshaft.

5. The four-cycle engine according to claim 3,
wherein the peripheral length and the arrangement position of the mask member are set such that a bisector of the arc passing through the center of the exhaust valve opening intersects with the portion of the cylinder internal surface on the exhaust port side of the exhaust valve opening straight line.

6. The four-cycle engine according to any one of claims 2 to 5,
wherein the mask member is arranged such that a mask center thereof is located in a range of 300 degrees to 60 degrees, and has a peripheral length of the mask center ±90 degrees to 180 degrees, as seen in the clockwise direction where a portion thereof located closest to the intake port side of the exhaust valve opening is at 0 degree.

7. The four-cycle engine according to any one of claims 1 to 6,
wherein a height dimension of the mask member in an exhaust valve axial direction is set to a lift amount or less at the reopen of the exhaust valve.
